Europäisches Patentamt

European Patent Office

Office européen des brevets

(19)

(11) Veröffentlichungsnummer: **0 049 013**
**B2**

(12) **NEUE EUROPÄISCHE PATENTSCHRIFT**

(45) Veröffentlichungstag der neuen Patentschrift:
04.02.87

(21) Anmeldenummer: 81201033.8

(22) Anmeldetag: 16.09.81

(51) Int. Cl.⁴: **D 01 H 1/30,** G 05 B 19/04

(54) Elektronischer Drehzahl-Sollwertgeber für den Spindelantrieb einer Ringspinnmaschine.

(30) Priorität: 01.10.80 CH 7320/80

(43) Veröffentlichungstag der Anmeldung:
07.04.82 Patentblatt 82/14

(45) Bekanntmachung des Hinweises auf die Patenterteilung:
19.09.84 Patentblatt 84/38

(45) Bekanntmachung des Hinweises auf die Entscheidung
über den Einspruch:
04.02.87 Patentblatt 87/6

(84) Benannte Vertragsstaaten:
CH DE FR GB IT LI

(56) Entgegenhaltungen:
DE-A-1 763 403
DE-A-1 940 486
DE-A-2 054 627
DE-A-2 203 915
DE-A-2 542 874
DE-C-877 122
GB-A-804 567
GB-A-1 232 207
US-A-3 443 373

Revue Brown Boveri, Bd. 54, Nr. 5/6, 1967, S. 342-347

(73) Patentinhaber: BBC Aktiengesellschaft Brown,
Boveri & Cie., Haselstrasse, CH- 5401 Baden (CH)

(72) Erfinder: Falk, Jean- Pierre, Chemin de Pont
Céard 22, CH- 1920 Versoix (CH)

EP 0 049 013 B2

## Beschreibung

Die Erfindung bezieht sich auf einen Drehzal-Sollwertgeber nach dem Oberbegriff des Patentanspruchs 1.

Mit dem Oberbegriff nimmt die Erfindung auf einen Stand der Technik von elektronischen Drehzahl-Sollwertgebern für den Spindelantrieb einer Ringspinnmaschine Bezug, wie er in der DE-A1 1 763 403 beschrieben ist. Dort wird in Abhängigkeit von der Grundgeschwindigkeit der Spindel ein trapezförmiges Geschwindigkeitssignal erzeugt, bei dem einem Signal, entsprechend einer vorgebbaren konstanten Anfangsgeschwindigkeit, eine Anstiegsrampe, ein anschliessender Konstantabschnitt und eine Abstiegsrampe überlagert sind. Diesem trapezförmigen Geschwindigkeitssignal wird in einem Summierglied ein in Abhängigkeit von der Bewegung der Ringschiene oszillierendes Steuersignal überlagert. In Abhängigkeit von dem so erhaltenen Summensignal wird die Ankerspannung des Gleichstrommotors für den Antrieb der Spindel gesteuert bzw. geregelt. Nachteilig dabei ist, dass beim Start eine relativ grosse Anfangsgeschwindigkeit der Spindel vorgegeben wird, die zu einer übermässigen Beschleunigung und damit zu einer Überbeanspruchung des Garns führen kann.

Die Erfindung, wie sie im Patentanspruch 1 definiert ist, löst die Aufgabe, einen elektronischen Drehzahl-Sollwertgeber für den Spindelantrieb einer Ringspinnmaschine anzugeben, der besser an den Bewegungsablauf des Spulenwickelkörpers angepasst ist und eine Überbeanspruchung des Garns beim Aufwickeln verhindert.

Die danach vorgesehene, gesonderte Erfassung der stetigen und der oszillierenden Hubkomponente der Ringbewegung gegenüber den Spulenträgern in Verbindung mit eigenen Funktionsgeneratoren, die von den beiden genannten Hubkomponenten gesteuert werden und je eigene, den beiden Bewegungen optimal angepaßte Sollwertkomponenten liefern, ermöglicht eine freizügige Anpassung des Bewegungsablaufes mit seinen Geschwindigkeiten und Beschleunigungen an die Veränderung des Wickeldurchmessers im Verlauf der Erzeugung des Spulen-Wickelkörpers.

Zum einschlägigen Stand der Technik wird zusätzlich auf Revue Brown Boveri, Bd. 54, Nr. 5/6, 1967, S. 342 - 347 verwiesen, aus der ein Drehzahl-Sollwertgeber mit mechanischem Hebel- und Lenkergetriebe, welches unmittelbar auf das Stellglied eines drehzahlsteuerbaren Elektromotors einwirkt, bekannt ist. Solche mechanischen Steuervorrichtungen unterliegen wegen der Massenträgheit grundsätzlichen Begrenzungen hinsichtlich einer Drehzahlerhöhung und sind im Aufbau kompliziert sowie aufwendig und vergleichsweise verschleissanfällig.

Weitere Merkmale und Vorteile der Erfindung werden anhand des in den Zeichnungen veranschaulichten Ausführungsbeispiels erläutert. Hierin zeigt

Fig. 1a und Fig. 1b die Schaltung eines elektrischen Drehzahl-Sollwertgebers nach der Erfindung während

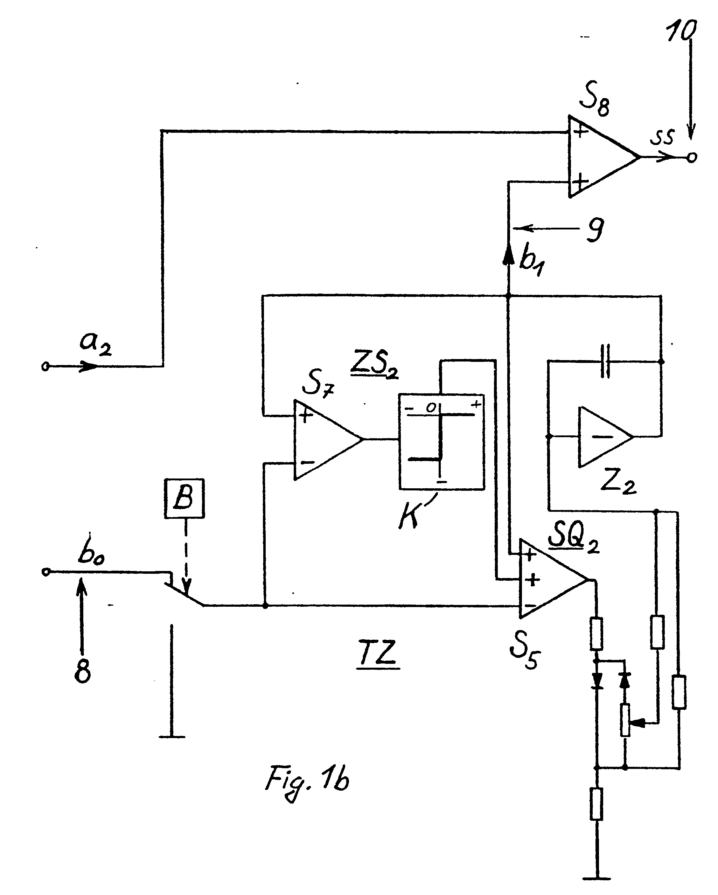

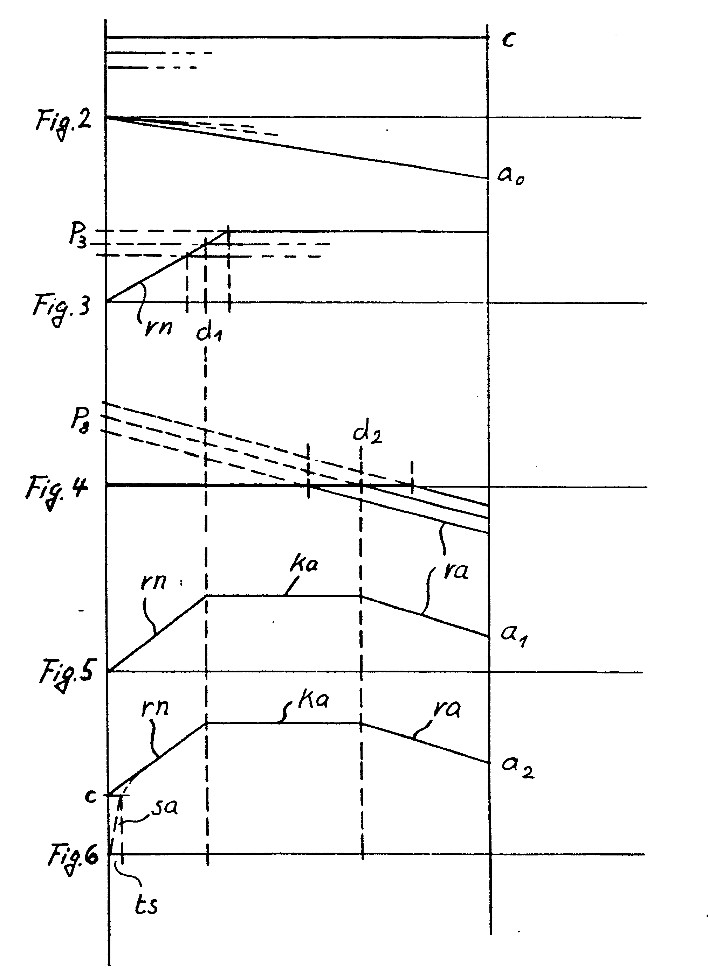

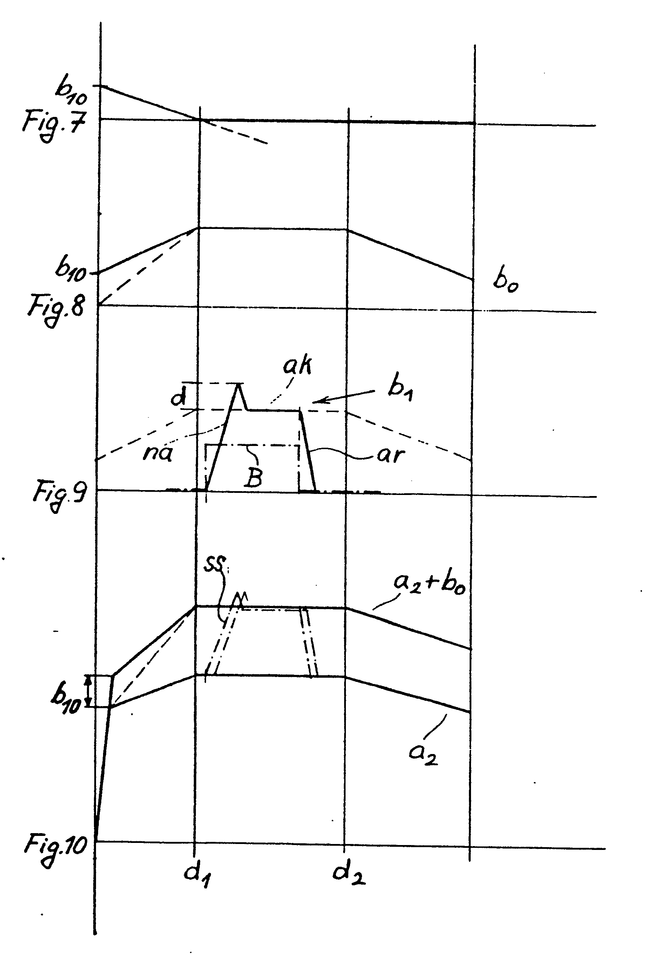

Fig. 2 bis Fig. 10 je ein Signal-Zeitdiagramm für einen entsprechenden bezifferten Schaltungspunkt wiedergibt

Die erste Abtastvorrichtung A ist als mit der stetigen Hubbewegung des Ringes gegenüber dem Spulenträger gekoppeltes, beispielsweise mit dem entsprechenden Antriebsorgan der Ringbank verbundenes Potentiometer ausgebildet, welches ein entsprechend variables stellungssignal $a_0$ liefert. Das Potentiometer der Abtastvorrichtung A wird vom Abgriff eines fest einstellbaren Potentiometer eines Signalgebers C zur Erzeugung einer Sollwert-Grundkomponente c gespeist. Das Stellungssignal $a_0$ ist somit proportional von der Sollwert-Grundkomponente c abhängig. Auf diese Weise läßt sich der gesamte Zeitverlauf der stetigen Sollwertkomponente über dem Stellungssignal $a_0$ geometrisch ähnlich verändern. Die Grundkomponente c wird jeweils bei Anfang und Ende eines Wickelvorganges durch einen Relaiskontakt CM ein- bzw. ausgeschaltet.

Der Abtastvorrichtung A ist eine Diskriminator- und Inverterschaltung $D_1$ nachgeordnet, die im wesentlichen eine erste Sollwertkomponente $a_1$ mit einer Anstiegsrampe rn, einem Konstantabschnitt ka und einer Abstiegsrampe ra in Abhängigkeit vom variabien Signal $a_0$ bildet. Die Schaltung DI umfaßt zwei Parallelkanäle I und II, wobei ein Verstärker $V_1$ mit einem Überbrückungstransistor als erstes Begrenzungsglied $BG_1$ wirkt und den Übergang von der Anstiegsrampe zum Konstantabschnitt bestimmt. Der Stellungswert $d_1$, bei welchem dieser Übergang erfolgt, ist durch die an einem Potentiometer $P_3$ abgegriffene Steuerspannung für den Überbrückungstransistor des Verstärkers $V_1$ bestimmbar. Im zweiten Parallelkanal II ist ein zweites Begrenzungsglied $BG_2$ durch ein Summierglied $S_2$ mit nachgeordnetem Gleichrichter gebildet, welch letzterer nur das der Abstiegsrampe entsprechende Signal durchläßt und in einem Summierglied $S_1$ mit dem Ausgangssignal des ersten Parallelkanals I überlagert. Hierdurch ergibt sich bereits die erwähnte Sollwertkomponente $a_1$, die über einen Inverter und ein Einstellpotentiometer in einem weiteren Summierglied $S_3$ mit der Sollwert-Grundkomponente c überlagert wird. Hierdurch ergibt sich eine zusammengesetzte Sollwertkomponente $a_2$.

Zurück zur Diskriminator- und Inverterschaltung DI: Dem Summierglied $S_2$ des zweiten Begrenzungsgliedes $BG_2$ wird über einen Inverter Vi und ein Potentiometer $P_8$ ein einstellbares Summandensignal zugeführt, welches proportional zu c ist und durch die Einstellbarkeit von $P_8$ den Stellungswert $d_2$ des Überganges zwischen Konstantabschnitt ka und Abstiegsrampe ra im Verlauf von $a_1$ bestimmt.

Dem Signalgeber C für die Grundkomponente c ist ein Nachlauf-Hilfsregelkreis $SQ_1$ mit einem als Integrator ausgebildeten Verzögerungs-Zeitglied $Z_1$ nachgeordnet, und zwar im Beispielsfall im Anschluß an das Summierglied $S_3$. Es erhält also die zusammengesetzte Sollwertkomponente $a_2$ eine Startverzögerung ts mit einer steilen Anstiegsrampe sa, die bei Erreichen des vollen Wertes von $a_2$ endet. Dadurch werden übermäßige Beschleunigungskräfte und eine Überbeanspruchung des Garns vermieden.

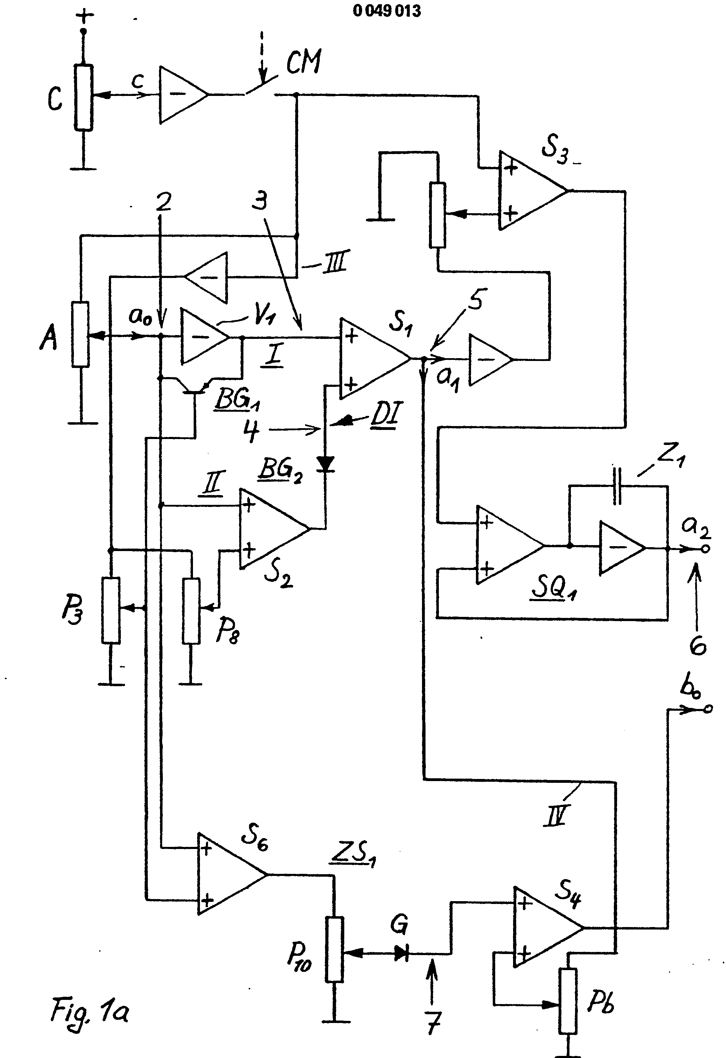

Die zweite Abtastvorrichtung B ist gemäß Fig. 1b als Ein-Aus-Schalter ausgebildet, der mit dem Antrieb der oszillierenden Hubbewegung gekoppelt ist und durch sein Einschalten bzw. Ausschalten den Beginn und das Ende je eines solchen Oszillationshubes markiert. Der Schalter B führt ein vom Signal $a_1$ abgeleitetes Oszillations-Amplitudensignal $b_0$ einem Trapezsignalgenerator TZ zu, der einen zweiten Nachlauf-Hilfsregelkreis $SQ_2$ mit einen Summierglied $S_5$ und einem Integrator-Zeitglied $Z_2$ umfaßt. Hierdurch ergibt sich im Verlauf der Oszillations-Sollwertkomponente $b_1$, die in einem abschließenden Summierglied $S_8$ mit der zusammengesetzten Sollwertkomponente $a_2$ zum Sollwertsignal ss überlagert wird, wiederum eine Anstiegsrampe na, ein Konstantabschnitt ak und eine Abstiegsrampe ar.

Infolge gesonderter Eingangskreise mit entgegengesetzt gepolten Gleichrichtern ergeben sich für die Anstiegsrampe und die Abstiegsrampe gesonderte Einstellmöglichkeiten der entsprechenden Steigung. Außerdem ist für die Anstiegsrampe eine Überschwingung d vorgesehen, die mittels einen Zusatzsignalgenerators $ZS_2$ erzeugt wird. Letzterer umfaßt eine Kippschaltung K, die über ein Summierglied $S_7$ mit der Differenz von Signal $b_0$ und $b_1$ beaufschlagt wird und im negativen Bereich dieser Differenz dem Summierglied $S_5$ eine entsprechende Zusatzkomponente zuführt, die in dem durch das Integrator-Zeitglied $Z_2$ gebildeten Rampengenerator eine entsprechende Versteilerung und Verlängerung bzw. bei Sättigung von $S_5$ eine Verlängerung der Rampe und damit die gewünschte Überschwingung d hervorruft. Mit Übergang in den positiven Bereich der genannten Differenz entkoppelt die Kippschaltung K den Zusatzsignalgenerator $ZS_2$ von Rampengenerator, so daß der weitere Verlauf der Sollwertkomponente $b_1$ bis zur nächsten Anstiegsrampe unbeeinflußt bleibt.

Die Ableitung des Signals $b_0$ vom Signal $a_1$ erfolgt gemäß Fig. 1a über eine Steuerverbindung IV, ein Einstellpotentiometer Pb und ein Summierglied $S_4$, so daß eine gleichsinnige, und zwar im Beispielsfall proportionale Abhängigkeit der Amplitude der Sollwertkomponente $b_1$ von der Amplitude der Sollwertkomponente $a_1$ gegeben ist. Dies gilt selbstverständlich nur für die Abhängigkeit der

Sollwertkomponente $b_1$ von $b_0$ und damit von $a_1$, nicht jedoch für die Überschwingung d.

Durch das Summierglied $S_4$ wird ferner ein Zusatzsignalgenerator $ZS_1$ für die Erzeugung einer endlichen Anfangsamplitude $b_{10}$ der Sollwertkomponente $b_1$ bei verschwindender Sollwertkomponente $a_1$ in den Eingangskreis des Trapezsignalgenerators TZ eingekoppelt. Der Zusatzsignalgenerator $ZS_1$ umfaßt im wesentlichen ein Summierglied $S_6$ mit nachgeordnetem Einstellpotentiometer $P_{10}$ und Gleichrichter G. Den Eingängen von $S_6$ wird einerseits das Signal $a_0$ und andererseits eine Einstellgröße entsprechend dem Stellungswert $d_1$ vom Potentiometer $P_3$ zugeführt. Damit wird erreicht, daß der Zusatzsignalgenerator lediglich im Bereich der Anstiegsrampe rn ein von einem Anfangswert aus stetig abnehmendes und bei $d_1$ verschwindendes Zusatzsignal liefert. welches dem bei $d_1$ verschwindenden Zusatzwert der Anfangsamplitude des Oszillationshubes entspricht. Nachdem die Speisung des Potentiometers $P_3$ über die Steuerverbindung III vom Grundkomponenten-Signalgeber C aus erfolgt, ergibt sich insgesamt eine konsistente Abhängigkeit aller Signalamplituden bzw. Sollwertkomponenten von dem Einstellwert des Signals c.

Insgesamt lassen sich mit den erläuterten Signal- und Funktionsgeneratoren und den zugehörigen Einstellgliedern alle praktisch wesentlichen Einflußgrößen des Wickelvorganges bei veränderlichem Wickeldurchmesser und entsprechend den unterschiedlichen Abmessungen der Wicklungslagen im Verlauf des gesamten Wickelvorganges optimal berücksichtigen. Übermäßige Beanspruchungen des Wickelgutes können somit entsprechend den jeweils in der Praxis vorliegenden Verhältnissen trotz hoher Drehzahlen und Arbeitsgeschwindigkeiten vermieden werden. Die Signaldiagramme für die verschiedenen Schaltungspunkte lassen in diesem Zusammenhang die Funktion im einzelnen ohne weiteres erkennen.

**Patentansprüche**

1. Elektronischer Drehzahl-Sollwertgeber für den Spindelantrieb einer Ringspinnmaschine
a) mit einer ersten Abtastvorrichtung (A) zur Erzeugung eines stetigen, nichtoszillierenden ersten Bewegungssignals der Bewegung eines für die Garnführung vorgesehenen Ringes,
b) mit einer zweiten Abtastvorrichtung (B) zur Erzeugung eines mit der Hubbewegung dieses Ringes relativ zu einem Spindelträger alternierenden zweiten Bewegungssignals und
c) mit einer Bewegungsüberlagerungsvorrichtung zur Überlagerung dieses ersten und zweiten Bewegungssignals, die ein Sollwertkomponenten-Summierglied ($S_8$)

aufweist, an dessen Ausgang ein Drehzahl-Sollwertsignal (ss) abgreifbar ist,

d) wobei dieses Sollwertkomponenten-Summierglied ($S_8$) eingangsseitig über eine Diskriminator- und Inverterschaltung (DI) mit der ersten Abtastvorrichtung (A) in Wirkverbindung steht,

e) wobei diese Diskriminator- und Inverterschaltung (DI) in Abhängigkeit von dem ersten Bewegungssignal ($a_0$) eine über den gesamten Zeitverlauf des Wickelvorganges stetige, nichtoszillierende erste Drehzahl-Sollwertkomponente ($a_1$) erzeugt, die eine Anstiegsrampe (rn), einen wenigstens annähernden Konstantabschnitt (ka) und eine Abstiegsrampe (ra) aufweist,

f) wobei das Sollwertkomponenten-Summierglied ($S_8$) ferner eingangsseitig über einen Trapezsignalgenerator (TZ) mit der zweiten Abtastvorrichtung (B) in Wirkverbindung steht,

g) wobei dieser Trapezsignalgenerator (TZ) in Abhängigkeit von dem zweiten Bewegungssignal eine zweite Drehzahl-Sollwertkomponente ($b_1$) erzeugt, die eine Anstiegsrampe (na), einen wenigstens annähernden Konstantabschnitt (ak) und eine Abstiegsrampe (ar) alternierend mit der Hubbewegung des Ringes aufweist,

h) mit einem einstellbaren Signalgeber (C) zur Erzeugung einer Drehzahl-Sollwertgrundkomponente (c) mit nachgeordnetem Summierglied ($S_3$) für die Überlagerung mit der ersten Drehzahl-Sollwertkomponente,

dadurch gekennzeichnet,

i) dass dem Signalgeber (C) für die Drehzahl-Sollwertgrundkomponente (c) des Drehzahl-Sollwertsignals (ss) ein Start-Verzögerungsglied ($Z_1$) nachgeordnet ist.

2. Elektronischer Drehzahl-Sollwertgeber nach Anspruch 1, dadurch gekennzeichnet, dass eine Steuerverbindung (III) zwischen dem Grundkomponenten-Signalgeber (C) und der ersten Abtastvorrichtung (A) zur Erzeugung einer gleichsinnigen Abhängigkeit zwischen der Amplitude der ersten Drehzahl-Sollwertkomponente ($a_1$) und der Drehzahl-Sollwertgrundkomponente (c) des Drehzahl-Sollwertsignals (ss) vorgesehen ist.

3. Elektronischer Drehzahl-Sollwertgeber nach einem der vorangehenden Ansprüche, dadurch gekennzeichnet, dass eine Steuerverbindung (IV) zwischen der Diskriminator- und Inverterschaltung (DI) der ersten Abtastvorrichtung (A) und dem Trapezsignalgenerator (TZ) der zweiten Abtastvorrichtung (B) zur Erzeugung einer gleichsinnigen Abhängigkeit der Amplitude der zweiten Drehzahl-Sollwertkomponente ($b_1$) und der Amplitude der ersten Drehzahl-Sollwertkomponente ($a_1$) vorgesehen ist.

4. Elektronischer Drehzahl-Sollwertgeber nach Anspruch 3, dadurch gekennzeichnet, dass ein mit dem Trapezsignalgenerator (TZ) der zweiten Abtastvorrichtung (B) gekoppelter Zusatzsignalgenerator ($ZS_1$) für die Erzeugung

einer endlichen Anfangsamplitude ($b_{10}$) der zweiten Drehzahl-Sollwertkomponente ($b_1$) bei verschwindender erster Drehzahl-Sollwertkomponente ($a_1$) vorgesehen ist.

5. Elektronischer Drehzahl-Sollwertgeber nach einem der vorangehenden Ansprüche, dadurch gekennzeichnet, dass der Trapezsignalgenerator (TZ) einen Zeitglied-Rampengenerator ($Z_2$) mit gesonderten Zeitkonstanten für die Anstiegs- und Abstiegsrampe (na, ar) der zweiten Drehzahl-Sollwertkomponente ($b_1$) aufweist.

6. Elektronischer Drehzahl-Sollwertgeber nach Anspruch 5, dadurch gekennzeichnet, dass der Trapezsignalgenerator (TZ) mit einem Zusatzsignalgenerator ($ZS_2$) für die Erzeugung einer Überschwingung (d) der Anstiegsrampe (na) der zweiten Drehzahl-Sollwertkomponente ($b_1$) gekoppelt ist und dass dieser Zusatzsignalgenerator ($ZS_2$) eine Kippschaltung (K) zur Entkopplung dieses Zusatzsignalgenerators vom Trapezsignalgenerator (TZ) im Anschluss an die Anstiegsrampe der zweiten Drehzahl-Sollwertkomponente ($b_1$) aufweist.

**Claims**

1. Electronic speed setpoint generator for the spindle drive of a ring spinning frame,

a) having a first scanning device (A) for generating a constant, non-oscillating first motion signal of the motion of a ring provided for yarn guidance,

b) having a second scanning device (B) for generating a second motion signal which alternates with the motion of travel of this ring relative to a spindle carrier, and

c) having a motion superimposition device for superimposing this first and second motion signal, which is provided with a setpoint component summing section ($S_8$) at the output of which a speed setpoint signal (ss) can be picked up,

d) in which arrangement the input of this setpoint component summing section ($S_8$) is effectively connected to the first scanning device (A) via a discriminator and inverter circuit (DI),

e) in which arrangement this discriminator and inverter circuit (DI) generates, in dependence on the first motion signal ($a_0$), a non-oscillating first speed setpoint component ($a_1$) which is constant over the entire period of time of the winding process and which has a rising ramp (rn), an at least approximately constant section (ka) and a falling ramp (ra),

f) in which arrangement the input of the setpoint component summing section ($S_8$) is also effectively connected to the second scanning device (B) via a trapezoidal-signal generator (TZ),

g) in which arrangement this trapezoidal-signal generator (TZ) generates, in dependence on the second motion signal, a second speed setpoint component ($b_1$) which has a rising ramp (na), an at least approximately constant section (ak) and a falling ramp (ar), alternating with the motion of travel of the ring,

h) having an adjustable signal generator (C) for generating a basic speed setpoint component (c), including a subsequent summing section (S3) for superimposition of the first speed setpoint component,

characterized in that

i) the signal generator (C) for the basic speed setpoint component (c) of the speed setpoint signal (ss) is followed by a start delay section (Z$_1$).

2. Electronic speed setpoint generator according to Claim 1, characterized in that a control connection (III) is provided between the basic-component signal generator (C) and the first scanning device (A) for generating a dependence of the same polarity between the amplitude of the first speed setpoint component (a$_1$) and the basic speed setpoint component (c) of the speed setpoint signal (ss).

3. Electronic speed setpoint generator according to one of the preceding claims, characterized in that a control connection (IV) is provided between the discriminator and inverter circuit (DI) of the first scanning device (A) and the trapezoidal-signal generator (TZ) of the second scanning device (B) for generating a dependence of the same polarity of the amplitude of the second speed setpoint component (b$_1$) and the amplitude of the first speed setpoint component (a$_1$).

4. Electronic speed setpoint generator according to Claim 3, characterized in that an additional signal generator (ZS$_1$), which is coupled to the trapezoidal- signal generator (TZ) of the second scanning device (B), is provided for generating a finite initial amplitude (b$_{10}$) of the second speed setpoint component (b$_1$) when the first speed setpoint component (a$_1$) disappears.

5. Electronic speed setpoint generator according to one of the preceding claims, characterized in that the trapezoidal-signal generator (TZ) has a timing-section ramp generator (Z$_2$) with separate time constants for the rising and falling ramp (na, ar) of the second speed setpoint component (b$_1$).

6. Electronic speed setpoint generator according to Claim 5, characterized in that the trapezoidal-signal generator (TZ) is coupled to an additional signal generator (ZS$_2$) for generating an overshoot (d) of the rising ramp (na) of the second speed setpoint component (b$_1$) and that this additional signal generator (ZS$_2$) has a relaxation circuit (K) for decoupling this additional signal generator from the trapezoidal-signal generator (TZ) following the rising ramp of the second speed setpoint component (b$_1$).

## Revendications

1.- Générateur électronique de valeur de consigne de régime de rotation pour le mécanisme d'entraînement des broches d'un métier continu à filer à anneau,
comportant:

a) un premier dispositif d'analyse (A) destiné à produire un premier signal de mouvement non oscillant continu du mouvement d'un anneau prévu pour le guidage du fil,

b) un deuxième dispositif d'analyse (B) pour produire un deuxième signal de mouvement alternant avec la course de cet anneau par rapport à un support de broche, et

c) un dispositif de superposition de mouvements pour superposer ce premier et ce second signal de mouvement, qui comporte un élément sommateur de composantes de valeur de consigne (S$_8$) à la sortie duquel peut être pris un signal de valeur de consigne de régime de rotation (ss),

d) cet élément sommateur de composantes de valeur de consigne (S$_8$) étant en liaison active, du côté d'entrée, par l'intermédiaire d'un circuit discriminateur et inverseur (DI), avec le premier dispositif d'analyse (A),

e) ce circuit discriminateur et inverseur (DI) produisant, en fonction du premier signal de mouvement (a$_0$), une première composante de valeur de consigne de régime de rotation (a$_1$) non oscillante et continue sur toute la durée de l'opération de bobinage, qui présente une rampe montante (rn), une section au moins à peu près constante (ka) et une rampe descendante (ra),

f) l'élément sommateur de composantes de valeur de consigne (S$_8$) étant relié en outre de manière active, à son entrée, par l'intermédiaire d'un générateur de signal trapézoïdal (TZ) au second dispositif d'analyse (B),

g) ce générateur de signal trapézoïdal (TZ) produisant, en fonction du second signal de mouvement, une deuxième composante de valeur de consigne de régime de rotation (b$_1$) qui presente une rampe montante (na), une section au moins à peu près constante (ak) et une rampe descendante (ar) alternant avec la course de l'anneau,

h) un générateur de signal réglable (C) pour produire une composante de base de valeur de consigne de régime de rotation (c), suivi d'un élément sommateur (S$_3$) pour la superposition avec la première composante de valeur de consigne de régime de rotation,

caractérisé en ce que

i) le générateur de signal (C) pour la composante de base de valeur de consigne de régime de rotation (c) du signal de valeur de consigne de régime de rotation (ss) est suivi d'un élément de retardement de démarrage (Z$_1$).

2.- Générateur électronique de valeur de consigne de régime de rotation suivant la revendication 1, caractérisé en ce qu'une liaison de commande (III) est prévue entre le générateur de signal de composante de base (C) et le

9    0 049 013    10

premier dispositif d'analyse (A) pour produire une dépendance de même sens entre l'amplitude de la première composante de valeur de consigne de régime de rotation ($a_1$) et la composante de base de valeur de consigne de régime de rotation (c) du signal de valeur de consigne de régime de rotation (ss).

3.- Générateur électronique de valeur de consigne de régime de rotation suivant l'une quelconque des revendications précédentes, caractérisé en ce qu'une liaison de commande (4) entre le circuit discriminateur et inverseur (DI) du premier dispositif d'analyse (A) et le générateur de signal trapézoïdal (TZ) du second dispositif d'analyse (B) est prévu pour produire une dépendance de même sens de l'amplitude de la seconde composante de valeur de consigne de régime de rotation ($b_1$) et de l'amplitude de la première composante de valeur de consigne de régime de rotation ($a_1$).

4.- Générateur électronique de valeur de consigne de régime de rotation suivant la revendication 3, caractérisé en ce qu'un générateur de signal auxiliaire ($ZS_1$) couplé au générateur de signal trapézoïdal (TZ) du second dispositif d'analyse (B) est prévu pour produire une amplitude de départ finale ($b_{10}$) de la seconde composante de valeur de consigne de régime de rotation ($b_1$) lors de la disparition de la première composante de valeur de consigne de régime de rotation ($a_1$).

5.- Générateur électronique de valeur de consigne de régime de rotation suivant l'une quelconque des revendications précédentes, caractérisé en ce que le générateur de signal trapézoïdal (TZ) comporte un générateur de rampe à éléments à temps ($Z_2$) présentant des constantes de temps séparées pour la rampe montante et la rampe descendante (na, ar) de la seconde composante de valeur de consigne de régime de rotation ($b_1$).

6.- Générateur électronique de valeur de consigne de régime de rotation suivant la revendication 5, caractérisé en ce que le générateur de signal trapézoïdal (TZ) est couplé à un générateur de signal auxiliaire ($ZS_2$) pour la production d'une suroscillation (d) de la rampe montante (na) de la seconde composante de valeur de consigne de régime de rotation ($b_1$) et ce générateur de signal auxiliaire ($ZS_2$) comporte une bascule (K) destinée à désaccoupler ce générateur de signal auxiliaire du générateur de signal trapézoïdal (TZ) à la suite de la rampe montante de la seconde composante de valeur de consigne de régime de rotation ($b_1$).

6

0 049 013

Fig. 1a

1

0 049 013

Fig. 1b

3

0 049 013

Fig.2

$a_o$

$c$

$P_3$

Fig.3

$rn$  $d_1$

$P_3$

$d_2$

Fig.4

$rn$  $ka$  $ra$

$a_1$

Fig.5

$rn$  $ka$  $ra$

$a_2$

$c$  $sa$

Fig.6

$ts$

5

Fig.7

Fig.8

Fig.9

Fig.10